(19) Europäisches Patentamt
European Patent Office
Office européen des brevets

(11) **EP 3 700 762 B1**

(12) **EUROPEAN PATENT SPECIFICATION**

(45) Date of publication and mention
of the grant of the patent:
**12.05.2021   Bulletin 2021/19**

(21) Application number: **19832146.5**

(22) Date of filing: **24.12.2019**

(51) Int Cl.:
**B60C 9/00** *(2006.01)*     **B60C 15/04** *(2006.01)*
**B60C 9/02** *(2006.01)*

(86) International application number:
**PCT/EP2019/087007**

(87) International publication number:
**WO 2020/141138 (09.07.2020 Gazette 2020/28)**

(54) **HEAVY-LOAD VEHICLE**

SCHWERLASTFAHRZEUG

VÉHICULE PORTANT UNE LOURDE CHARGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.12.2018   PCT/EP2018/086896**

(43) Date of publication of application:
**02.09.2020   Bulletin 2020/36**

(73) Proprietor: **Goldhofer AG**
**87700 Memmingen (DE)**

(72) Inventors:
• **KOSTER, Johan**
**4691 SM Tholen (NL)**
• **HÄFELE, Horst**
**87727 Babenhausen (DE)**

(74) Representative: **Herzog, Markus**
**Weickmann & Weickmann**
**Patent- und Rechtsanwälte PartmbB**
**Postfach 860 820**
**81635 München (DE)**

(56) References cited:
**EP-A1- 2 848 432     US-A1- 2013 299 052**

**Description**

The invention relates to a heavy-load vehicle comprising at least one axle unit, the or each axle unit comprising at least one wheel, each wheel comprising at least one tire, at least one tire being a tubeless radial tire having, when used as a single tire, a load-bearing capacity per millimeter section width at a speed of 60 km/h of at least 11 kg.

It should be noted that in the context of the present invention a heavy-load vehicle is understood to be a vehicle having an admissible overall weight of at least 30 t.

Furthermore, it should be noted that like prior art tires, the tire according to the invention has a base wall and two side walls, each side wall being connected to the base wall via a shoulder and having a radially inner end formed as a bead adapted and configured for being connected to a rim. As in prior art tires, the base wall and the side walls are mainly formed of rubber material. Furthermore, a tread including grooving is formed at the radially outer surface of the base wall. A carcass made from steel cords extends in the two side walls and the base wall from the bead of one side wall to the bead of the respective other side wall. As the tire is a radial tire, the carcass steel cords extend in the side walls in a substantially radial direction, whereas they extend in the base wall substantially in parallel to the rotational axis of the tire. It is to be noted that the extension direction of the carcass steel cords has in both, the side walls and the base wall, substantially no component in the circumferential direction. Furthermore, a belt made from steel cords is located in the base wall at the radially outer side of the carcass, and a bead ring made from steel wire is located in the bead of each side wall, the two lateral ends of the carcass being wrapped around the bead rings.

In many cases the load carried by such heavy-load vehicles is not only heavy, but also voluminous. Examples for such voluminous heavy loads are tubes, tanks, blocks and the like, which may be made of steel, wood, concrete, plastics and the like. In practice, however, the height of the load often is limited by obstacles, for example bridges, power lines, traffic signs and the like. Furthermore, in many countries the admissible overall height of heavy-load vehicles including the respective load is limited by legal regulations.

Furthermore, reference is made to documents EP 2 848 432 A1 and US 2013/299052 A1 each disclosing a tire for a heavy-load vehicle.

In view of these obstacles and/or legal limitations, it is the object of the invention to provide a greater flexibility for transports.

According to the present invention, this object is solved by a heavy-load vehicle of the afore-mentioned type, wherein the tire has an outer diameter of less than 755 mm and is adapted and configured for an internal pressure of at least 10 bar.

Tires having a load-bearing capacity per millimeter section width at a speed of 60 km/h of at least 11 kg are known. For example, the prior art Michelin 245/70R17.5 tire has, when used as a single tire, a load-bearing capacity of 3300 kg at a speed of 60 km/h. As this tire has an actual section width of 249 mm (up to ±4% deviation from the nominal section width are admissible according to ETRTO; ETRTO = European Tire and Rim Technical Organization), it has a load bearing capacity per millimeter section width of 13.3 kg. Furthermore, the Michelin 245/70R17.5 tire has an outer diameter of 796 mm and is used at a pressure of 9 bar.

However, there exists a prejudice against a further reduction of the diameter of the tire. This prejudice is caused by the fact that a smaller diameter causes a higher number of revolutions per distance traveled. As a consequence, a correspondingly higher amount of heat is generated per tire wall volume unit due to flexing, resulting in the risk of potential excessive heating of the tire.

It is the merit of the inventor to have ignored this prejudice.

Although a diameter reduction of 40 mm might seem to be small, it is emphasized that such an increase of available load height constitutes a considerable step forward for transport business. And, it would be advantageous to further reduce the outer diameter of the tire to less than 735 mm, preferably less than 715 mm, the latter value resulting in an increase of the available load height of about 80 mm.

At this point, it should be noted that the term "outer diameter", unless specifically indicated otherwise, refers to the design outer diameter of the tire, i.e. the outer diameter of the tire in its uninflated, unloaded and unused state.

According to a further embodiment of the invention, the load-bearing capacity per mm section width at a speed of 60 km/h may be at least 12.5 kg, when used as a single tire. In particular, the load-bearing capacity at a speed of 60 km/h of a tire having a section width of 238 mm may amount to up to 3300 kg or even more, whereas the load-bearing capacity at a speed of 60 km/h of a tire having a section width of 215 mm may amount to up to 2750 kg or more.

In this context, it is to be noted that, according to ETRTO, the admissible load-bearing capacity decreases with increasing speed, while it increases with decreasing speed. For example, the load-bearing capacity at a speed of 80 km/h of a tire having a section width of 238 mm may amount to 3000 kg, whereas the load-bearing capacity of the same tire at a speed of 60 km/h may amount to 3300 kg.

In this context, it should be further noted that a reduction of the outer diameter of the tire, while maintaining the same load-bearing capacity per millimeter section width, results in an increase of the load-bearing capacity per square millimeter section width times section height. In particular, it is suggested that the tire has at a speed of 60 km/h a load-bearing capacity per square millimeter section width times section height of more than 80 g, preferably more than 95 g.

In this context, it should be noted that, based on a standard 17.5 inch rim, the section height of the tire according to the invention is less than 155 mm, preferably less than 145 mm, more preferably less than 135 mm. But even with a section height of 155 mm and a load-bearing capacity at a speed of 60 km/h of 2750 kg, a tire having a section width of 215 mm has a load-bearing capacity per square millimeter section width times section height of 82.5 g, while with a section height of 135 mm and a load-bearing capacity at a speed of 60 km/h of 3300 kg, a tire having a section width of 245 mm has a load-bearing capacity per square millimeter section width times section height of 99,8 g, whereas the prior art Michelin 245/70R17.5 tire has an admissible load-bearing capacity per square millimeter section width times section height at a speed of 60 km/h of only about 75 g.

Of course, it is conceivable to use rims having a diameter of less than 17.5 inches. In particular, rims having a diameter of 17.0 inches, 16.5 inches, 16.0 inches, 15.5 inches, 15.0 inches or even less could be used. In this case, it would be possible to either maintain the cross-section of the tire at a prior art value, in particular a cross-section a tire having an outer diameter in the order of 790 mm in combination with a 17.5 inches rim would have, or to reduce both the tire cross-section and the rim diameter, in order to obtain a tire having a smaller outer diameter. Any reduction of the rim size, however, would, due to the smaller space available, have consequences for the construction of the brakes as well. Furthermore, the use of a sealing band between rim and tire could be required, in particular for smaller rim diameters. Therefore, it is preferred to use a standard rim of 17.5 inches diameter.

It should be added at this point that the inflation pressure of 10 bar was chosen, as conventional tire inflation equipment is able to provide a pressure of this value, whereas special inflation equipment would be required for higher pressure values. Therefore, tire inflation pressures of more than 10 bar are only used for very special application purposes.

The afore-mentioned flexing is caused by the fact that the shape of a tire rotating under load continuously varies between a partially flattened shape in the circumferential area of the tire in contact with the road surface and a non-flattened shape in its diametrically opposite circumferential area. The flexing does not only cause excessive heating, but also exerts higher mechanical stress on the tire, in particular in the bead regions, the side walls and the shoulder regions of the tire.

In the bead regions of the tire, the flexing of the tire generally causes the risk of a loss of air due to a partial lifting-off from the rim. This risk is higher the higher the mechanical stress is. Furthermore, the pressure drop in the tire caused by a loss of a given amount of air is the higher the smaller the inner volume of the tire is, i.e. with given section width the smaller the outer diameter of the tire is. In order to improve the mechanical strength of the bead region, at least one of the following features may be taken into consideration.

According to an embodiment of the invention, it is suggested that the wire forming at least one of the bead rings, preferably the wires forming both bead rings, may include a plurality of windings, immediately adjacent wire sections being arranged in a triangular constellation, as a triangle is the most stable arrangement for objects having a substantially circular cross-section.

Furthermore, a compact overall arrangement of the bead rings may be achieved, if the steel wire of at least one bead ring is arranged, preferably the steel wires of both bead rings are arranged, when seen in a cross-section extending orthogonal to a circumferential direction around the rotational axis of the wire, according to a hexagonal shape.

According to a further embodiment of the invention, at least one bead ring, preferably both bead rings, may include at least 44, preferably at least 51, more preferably at least 58, windings of the bead wire. For example, the wire windings may be arranged according to a 5-6-7-8-7-6-5 configuration, preferably according to a 6-7-8-9-8-7-6 configuration, more preferably according to a 7-8-9-10-9-8-7 configuration.

According to a further embodiment of the invention, the wire of at least one bead ring, preferably the wires of both bead rings, may have a tensile strength of at least 3000 N, preferably of at least 3500 N, more preferably at least 3900 N. Furthermore, the bead ring wire of at least one bead ring, preferably both bead rings, may have a diameter of at least 1.55 mm.

By a high number of windings and/or the use of a wire having the afore-mentioned tensile strength, the bead ring may be provided with a high resistance against mechanical deformation, thus reducing the risk of a lift-off from the rim.

As alternatives, however, it may also be conceivable to use other configurations of the hexagonal shape and/or to use configurations different from the hexagonal shape and/or to use a wire having a rectangular cross-section instead of a wire having a circular cross-section.

Furthermore, it is suggested that a high elasticity modulus rubber is used in the bead apex adjacent to at least one of the bead rings, preferably both bead rings. The higher the elasticity modulus of the rubber is the higher is its resistance against mechanical deformation. For example, the elasticity modulus of the rubber used for the bead apex may amount to at least 15 N/mm$^2$.

The bead apex may be a profile having a generally triangular shape and mating on its one side against the bead ring and on a second side against the carcass, while the third side extends from the end of the carcass to the widest section of the carcass. The bead apex provides a cushion between the rigid bead ring and the flexible inner liner and the carcass.

Furthermore, the bead apex may include at least two bead apex sections, a first bead apex section being located adjacent to the bead ring and a second bead apex section being located distant from the bead ring. Providing two or more bead apex sections allows a greater variability for influencing the flexibility of the tire. For example, the elasticity modulus of the material of the first bead apex section may be selected to be higher than the elasticity modulus of the material of the second bead apex section.

According to an embodiment, the border line between the first bead apex section and an adjacent other bead apex section, e.g. the second bead apex section, may extend from the laterally outer-most point of the bead ring and in a substantially radial direction.

Furthermore, the thickness of the bead apex, i.e. e.g. the combination of the at least two bead apex sections, for example the bead apex thickness at the body turn-up height, i.e. the thickness measured at the free end of the carcass turned around the bead ring, and/or the bead apex thickness at the bead reinforcement height, i.e. the thickness measured at the free end of a bead reinforcement layer to be described later in more detail, are chosen small enough to provide sufficient flexibility to the tire and large enough to provide sufficient strength to the tire.

In order to improve the mechanical strength of the carcass, it is suggested that at least one carcass steel cord, preferably each carcass steel cord, may comprise at least 20, preferably at least 25, steel filaments, and/or that the carcass may have an ends per decimeter value of at least 50, preferably of at least 55, more preferably of at least 60 ends per decimeter. Both measures contribute to an increase of the stiffness of the side walls of the tire which is advantageous for resisting against excessive flexing.

Furthermore, the carcass steel cords may be made from normal-tensile steel (NT steel). Using normal-tensile steel as a material for forming the carcass steel cords is in contrast to the normal way of thinking of those skilled in the art, as normal-tensile steel has a lower tensile strength than high-tensile steel (HT steel) which is commonly used for the carcass.

As the carcass is one of the most important parts of a radial tire, it would seem to be more reasonable to change from HT steel to UT steel (ultra-tensile steel). Against this background, it is the inventors' merit to have realized that due to the increase of the stiffness achieved by the afore-discussed other measures, there is no longer a need for using HT steel for the carcass cords so that the cheaper NT steel could be used for the carcass cords.

Furthermore, at least one of the carcass steel cords, preferably all carcass steel cords, may have a tensile strength of at least 1500 N, preferably at least 1600 N, more preferably at least 1700 N.

According to a specific embodiment, it is proposed that at least one of the carcass steel cords, preferably all carcass steel cords, may have a 3+9+15+1 arrangement of steel filaments, preferably a 3+9+15*0.175+0.15 arrangement.

According to a further embodiment, it is proposed that at least one of the carcass steel cords, preferably all carcass steel cords, may have a 3+9+15 arrangement of steel filaments, preferably a 3+9+15*0.22 arrangement, preferably using NT steel wire, preferably having a tensile strength of at least 2700 N. By using a steel wire having a diameter which is a little bit increased as compared to the afore-discussed 3+9+15*0.175+0.15 arrangement, the wrap wire may be dispensed with. As a further consequence of the increased wire diameter, the diameter of the entire steel cord is increased, although the wrap wire is dispensed with. Therefore, the EPD value of the carcass steel cord has to be reduced from 60 to 48.

According to a still further embodiment, it is proposed that at least one of the carcass steel cords, preferably all carcass steel cords, may have a 1+5 arrangement of steel filaments, preferably a 1+5*0.4 arrangement, preferably using HT steel wire, preferably having a tensile strength of at least 2090 N. In this embodiment the use of HT steel wire is compensated by the considerably smaller number of wires.

By both further embodiments a higher bending stiffness of the carcass may be achieved, allowing to reduce the thinnest thickness of at least one side wall, preferably both side walls, of the tire to a maximum of 10 mm, in order to further increase the flexibility of the tire.

With respect to the notation of the arrangement of the steel filaments, it is to be noted that the positive integer values separated by a "+" sign indicate the respective number of filaments in each of the filament layers. If the notation comprises n "+" signs, n being a positive integer value as well, the arrangement includes n+1 layers of filaments, the innermost layer being indicated first, the outermost last. Furthermore, the diameter of the filaments in millimeters may be added using a "*" sign. However, if there is only one filament in the layer, the "1*" may be omitted and only the diameter may be indicated. Moreover, if a plurality of layers is formed of filaments having identical diameter, the diameter value is added only for the last layer. In the example "3+9+15*0.175+0.15", the steel cord has four layers, the innermost layer having three filaments, the second layer having nine filaments, the third layer having fifteen filaments, and the outermost layer having only one filament. While the filaments of the innermost, the second and the third layers each have a diameter of 0.175 mm, the outermost filament has a diameter of 0.15 mm.

At this point, it is to be noted that the same type of steel cords may also be used for forming a bead reinforcement layer partially wrapped around the bead ring(s). The bead reinforcement layer may have a width of about 55 mm.

As an alternative, however, it is proposed that the steel cord used for forming the bead reinforcement layer may have a 3+9 arrangement of steel filaments, preferably a 3+9*0.22 arrangement, preferably using NT steel wire, preferably having a tensile strength of at least 1130 N.

In order to reduce the stress in the tire's shoulder regions, it is, according to a first alternative, suggested that the belt may have a plurality of belt layers, wherein the outermost belt layer may have a smaller width than the second-outermost belt layer, which in turn may have a smaller width than the third-outermost belt layer, and wherein the three belt layers may preferably be arranged symmetrically one above the other. The resulting chamfer of the combination of the three outermost belt layers results in a staggered reduction of the inter-layer stress between adjacent belt layers already in more centrally located areas of the base wall.

According to a further embodiment of the invention, the steel cords of the outermost belt layer may extend substantially in circumferential direction. As a consequence, the outermost belt layer may act like a cap ply, thus preventing an exceedingly high diameter growth under pressure and during operation, i.e. rotation of the tire in contact with the underground. Furthermore, the outermost belt layer may help to reduce the inter-layer shear of the entirety of the belt layers, which again reduces the stress in the shoulder region.

In order to prevent an exceedingly high diameter growth under pressure and during operation, i.e. rotation of the tire in contact with the underground, instead of an outermost belt layer, according to a second alternative, two cap ply strips may be arranged in a side by side arrangement with a second-outermost belt layer, at least one of the cap ply strips optionally having a predetermined lateral distance, of e.g. a maximum of 5 mm, from the lateral end of the second-outermost belt layer.

It should be noted that, although the second-outermost belt layer of the second alternative geometrically strictly speaking isn't the second-outermost belt layer, as the cap ply strips replacing the outermost belt layer aren't located above but beside the second-outermost belt layer, it will continue to be referred to as the second-outermost belt layer in the context of the present invention.

According to a further embodiment of the second alternative, at least one cap ply strip may include two cap ply layers arranged one above the other in a radial direction of the tire.

According to a further embodiment of both alternatives of the invention, the steel cords of the outermost belt layer or the cap ply strips, respectively, may be arranged with a density of about 40 cords per decimeter layer width.

Furthermore, the steel cords of the outermost belt layer or the cap ply strips, respectively, may be manufactured as high-elongation cords (HE cords), i.e. cords, which by the specific way of twisting may be elongated by at least 0.5%, preferably by at least 1.0%, more preferably by at least 2.0%, before resisting against a further elongation by producing a noteworthy elastic force.

According to a further embodiment of the invention, the steel cords of the outermost belt layer or the cap ply strips, respectively, may have a 3+7 arrangement of steel filaments, preferably a 3+7*0,20 arrangement.

In order to prevent pointed and/or sharp material from piercing the tire, it is suggested, according to a further embodiment of the invention, that the second-outermost belt layer may be manufactured from high-impact steel cord (HI steel cord), i.e. cord, which by the specific way of twisting allows a certain elongation, without generating an excessively high elastic counter force.

According to a further embodiment of the invention, the steel cords of the second outermost belt layer may comprise five identical steel filaments, preferably having a diameter of 0.30 mm.

In order to provide a strong belt, it is suggested, according to a further embodiment of the invention, that the third-outermost belt layer may have an ends per decimeter value of at least 50, preferably of at least 55, more preferably of at least 60 ends per decimeter, and/or that the second-outermost belt layer may be made from HT steel.

According to a specific embodiment, the steel cords of the third outermost belt layer may have a 3+6 arrangement of steel filaments, preferably a 3*0,20+6*0.35 arrangement.

Furthermore, it is suggested that the tire may comprise a fourth belt layer arranged radially inside the three outermost belt layers, the steel cords of this fourth belt layer being made from HT steel.

In order to improve the strength of the fourth belt layer, it is suggested that the innermost belt layer may have an ends per decimeter value of at least 50, preferably of at least 55, more preferably of at least 60 ends per decimeter.

Moreover, it is suggested that the steel cords of the innermost belt layer may confine an angle of less than 45°, preferably less than 35°, more preferably less than 25°, with the circumferential direction. Due to this comparably small angle, the innermost belt layer acts as a combination of a transition belt layer and a working belt layer, and thus offers the opportunity to reduce the width of the outermost belt layer and the second-outermost belt layer.

According to a specific embodiment, the steel cords of the third outermost belt layer may have a 3+6 arrangement of steel filaments, preferably a 3*0,20+6*0.35 arrangement.

Furthermore, a shoulder apex made from high elasticity modulus rubber may be provided in the shoulder region. The higher the elasticity modulus of the rubber is the higher is its resistance against mechanical deformation. For example, the elasticity modulus of the rubber used for the shoulder apex may amount to at least 15 N/mm$^2$. Basically, the shoulder apex could be made from the same rubber material as the bead apex. According to a specific embodiment, however, it is conceivable that it is made from a different rubber material as the bead apex.

The shoulder apex may be a profile being generally sickle-shaped and mating on its one side against the radially inner side of the belt and on a second side against the carcass, while a third side curvedly extends from the end of the belt to the widest section of the carcass. The shoulder apex provides a cushion between the belt and the flexible inner liner and the carcass.

Furthermore, the shoulder apex may include at least two shoulder apex sections, a first shoulder apex section corresponding to the above-discussed, preferably sickle-shaped, shoulder apex and a second shoulder apex section covering the first shoulder apex section and the belt from above, i.e. from radially outward. Providing the second shoulder apex sections which covers the belt from above allows to deal with the stress emanating from the belt in the direction of the should in a more effective manner. As such, although the elasticity modulus of the materials of the first and second shoulder apex sections may be different, it is also conceivable that they are equal.

In order to reduce the stress in the shoulder regions of the tires, it is further suggested that the thickness of the shoulder area may amount to a maximum of 35 mm and/or that the undertread thickness of the tire may amount to a maximum of 5 mm. In this context, the thickness of the shoulder area is defined as the shortest distance measured from transition point of the base wall to the side wall of the tire to the inner surface of the tire, i.e. to the point of the inner surface of the tire where the tangential line to the inner surface intersects the connection line to the transition point at an angle of 90°. Furthermore, the undertread thickness of the tire is defined as the difference of the radial positions of the tread measured in the lateral tread center and the afore-mentioned transition point.

According to a further embodiment of the invention, it is suggested that the tire may have a symmetrical construction with respect to a central plane orthogonal to the rotational axis of the tire. Such a symmetrical constructions allows to mount the tire on the rim irrespective of its orientation.

The inner liner of the tire located inside the carcass and forming the radially inner surface of the tire may be formed from a butyl rubber, preferably a halo-butyl rubber, the halogen preferably being chlorine.

Besides the afore-mentioned rubber materials used for the inner liner, the bead apex and the shoulder apex, conventional rubber mixtures may be used for manufacturing the tire.

According to a further embodiment, the tread of the tire may have three circumferential grooves.

Moreover, the section width of the tire may amount to between 200 mm and 300 mm.

Moreover, it is to be mentioned that the heavy-load vehicle of the invention may be a self-propelled vehicle or a towed vehicle, including fifth wheel semitrailers and/or axle supported trailers.

The axle units of the heavy-load vehicle may be force-steered axle units and/or friction-steered axle units and/or rigid axle units.

Furthermore, the axle units may be configured as beam axle units and/or individually suspended axle units, e.g. MacPherson axles, and/or pendular axle units.

Moreover, the suspension of the axle units may be a mechanical suspension and/or a spring suspension, and/or an air suspension and/or a hydraulic suspension.

Finally, in both directions of the heavy-load vehicle, i.e. in the longitudinal direction and the transverse direction, at least one axle unit may be provided. For example, a heavy-load trailer may have only one single beam axle, said single beam axle having two wheels, namely one on the left side and one on the right side of the trailer, each wheel having at least one tire according to the present invention.

In the following, the invention will be described in more detail with respect to a specific embodiment referring to the enclosed drawings, in which:

Figure 1          shows a cross-section of a tire according to the invention;

Figure 2          show a cross-sectional view of a bead ring of the tire of Figure 1;

Figure 3          show cross-sectional views of steel cord used in the carcass of the tire of Figure 1;

Figures 4 to 6    show cross-sectional views of steel cords used in the various layers of the belt of the tire of Figure 1;

Figure 7          shows a diagram of the tensile strength versus steel filament diameter characteristic of HT steel and NT steel;

Figure 8          shows a perspective view of a heavy-load vehicle according to the invention having pendular axle units;

Figure 9          shows a front view of a heavy-load vehicle according to the invention having individually suspended axle units;

Figure 10         shows a front view of a heavy-load vehicle according to the invention a beam axle unit; and

Figure 11        shows a tire cross-section similar of Figure 1 of a tire according to an alternative embodiment of the invention.

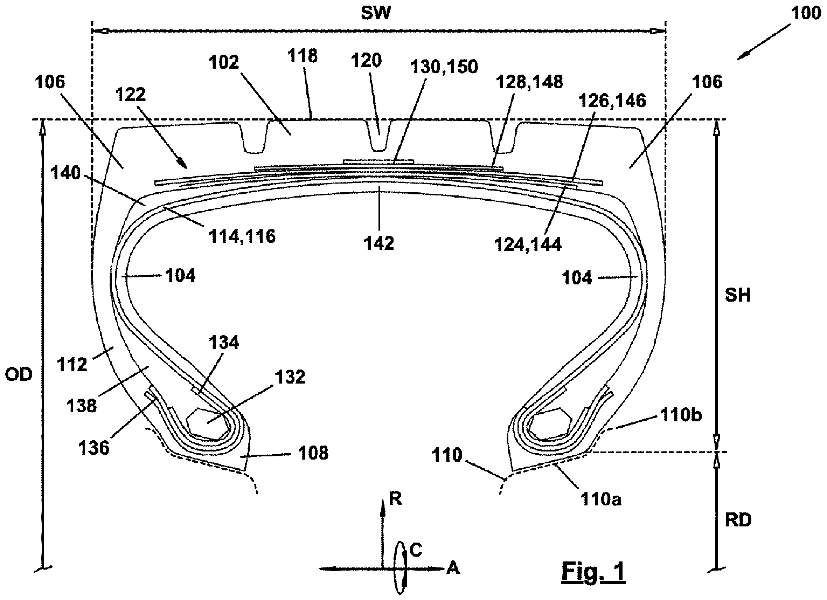

In Figure 1, a tire according to the invention is generally indicated by reference numeral 100. The tire 100 has a base wall 102, and two side walls 104.

One end of the side walls 104 is connected to the base wall 102 in a shoulder region 106, while the respective other end of the side walls 104 terminates in a bead region 108 adapted and configured for connection with a rim 110.

Like conventional tires, the tire 100 according to the invention is mainly made from rubber material 112 reinforced by specific elements made from steel cord and steel wire.

In particular, the tire 100 according to the invention has a carcass 114 made from steel cords 116, which extend from one bead region 108 through the allocated side wall 104, the base wall 102 and the respective other side wall 104 to the respective other bead region 108. The extension of the steel cords 116 having only components parallel to the direction of the rotational axis A of the tire 100 and the rim 110, respectively, an in radial direction R, however, no or substantially no component in circumferential direction C. In other words, the tire 100 is a radial tire.

The base wall 102 has a tread 118 having a plurality of grooves 120 forming the tread pattern. A belt 122 having four belt layers 124, 126, 128 and 130 and reinforcing the base wall 102 is arranged between the bottom of the grooves 120 and the carcass 114. As will be explained below in more detail, each of the four belt layers 124, 126, 128 and 130 is made from steel cord.

Finally, each of the bead regions 108 includes a bead ring 132 made from steel wire. The bead rings 132 are at least partly enveloped by the carcass 114. Furthermore, an inner reinforcement layer 134 is located between the bead ring 132 and the carcass 114, and an outer reinforcement layer 136 is located at the side of the carcass 114 facing away from the bead ring 132. The inner reinforcement layer 134 and the outer reinforcement layer 136 are both made from steel cord.

As the tire according to the present invention has a small outer diameter OD of less than 755 mm, preferably of less than 735 mm, more preferably of less than 715 mm, for a high load-bearing capacity per millimeter section width SW at a speed of 60 km/h of at least 11 kg, preferably of at least 12.5 kg, the side walls 104, the shoulder regions 106, and the bead regions 108 have to be able to resist to higher flexing stress than convention tires.

This is in particular true for a specific embodiment of the tire according to the present invention, which is adapted and configured to be used together with standard rims 110 having an outer rim diameter RD of 444,5 mm (17.5 inches), and thus having a small section height SH. The relevant point for determining the outer rim diameter RD and the section height SH is the transition point between the tire seat surface 110a and the radial outer flange 110b of the rim 110.

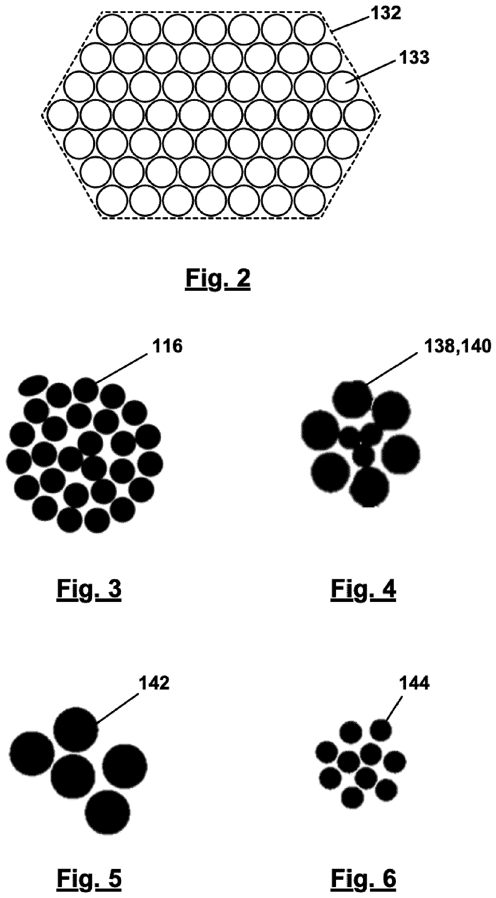

In order to strengthen the bead region 108, the bead rings 132 are made from a steel wire 133 having a diameter of 1.55 mm. According to a specific embodiment, shown in Figure 2, the wire is wound 58 times and the wire windings are arranged according to a hexagonal 7-8-9-10-9-8-7 configuration. It is, however, also conceivable that the bead rings 132 include less windings, e.g. only 51 or only 44 windings. In Figure 2, the overall hexagonal configuration is indicated by a dashed line, and in Figure 1 only the overall hexagonal configuration of the bead rings 132 is shown.

In order to further strengthen the bead region 108, a bead apex 138 may be located adjacent to and radially outward of each of the bead rings 132. The bead apex 138 is a profile having a generally triangular shape and mating on its one side against the bead ring 132 and on a second side against the carcass 114, while the third side extends from the end of the carcass 114 to the widest section of the carcass 114. Preferably, the bead apex 138 is made from high elasticity modulus rubber.

Analogously, a shoulder apex 140 may be located in both of the wedges between the belt 122 and the carcass 114 for strengthening the shoulder region 106 of the tire 100. Preferably, the shoulder apex 140 is made from high elasticity modulus rubber, for example from a slightly different rubber material as the bead apex 132.

In contrast to the bead apex 138 and the shoulder apex 140, the inner liner 142 of the tire 100 located inside the carcass 114 and forming the radially inner surface of the tire 100 may be formed from a butyl rubber, preferably a halo-butyl rubber, the halogen preferably being chlorine.

Besides the afore-mentioned rubber materials used for the inner liner 142, the bead apex 138 and the shoulder apex 140, conventional rubber mixtures may be used for remaining rubber material 112 of tire 100.

In order to strengthen the side walls 104, the steel cords 116 of the carcass 114 may, according to the specific embodiment shown in Figure 3, be made from steel cord having a 3+9+15+1 configuration, in particular a 3+9+15*0,175+0,15 configuration. In addition or as an alternative, the carcass 114 may have an ends per decimeter value of at least 50, preferably of at least 55, more preferably of at least 60 ends per decimeter. As a steel cord 116 having the afore-mentioned configurations and/or the afore-mentioned ends per decimeter value provides a sufficient strengthening of the side wall 104, the steel cord 116 may be made from NT steel.

The steel cord 116 used for manufacturing the carcass 114 may be used for manufacturing the inner and outer reinforcement layers 134, 136 as well.

In order to strengthen the shoulder regions 106, the belt 122 has a chamfer to both sides, i.e. the radially outermost belt layer 130 has a smaller width than the second-outermost belt layer 128, which in turn had a smaller width than the third-outermost belt layer 126. Furthermore, the three belt layers 130, 128 and 126 are arranged symmetrically one above the other, in order provide the same chamfer for both shoulder regions 106.

According to the specific embodiment shown in Figure 1, the belt 122 includes four belt layers 124, 126, 128 and 130, the innermost belt layer 124 being configured as a combination of a transition layer and a working layer, i.e. not as a pure transition layer. This combined function of the innermost belt layer 124 is achieved by the angle, which its steel cords 144 confine with the circumferential direction C. According to a specific embodiment, the steel cords 144 of the innermost belt layer 124 confine an angle of less than 45°, preferably less than 35°, more preferably less than 25°, with the circumferential direction C.

Moreover, the steel cords 144 may have the 3+6 configuration shown in Figure 4, in particular a 3*0,20+6*0.35 configuration, and may be made from HT steel. Furthermore, the innermost belt layer may 124 has an ends per decimeter value of at least 50, preferably of at least 55, more preferably of at least 60 ends per decimeter.

An innermost belt layer 124 of the afore-discussed construction allows to reduce the shear stress between the other belt layers 126, 128 and 130, and thus further assists in strengthening the shoulder regions 106.

The third-outermost belt layer 126 may include steel cords 146 having the same characteristics as the steel cords 144 of the innermost belt layer 124, however, confine a more acute angle with the circumferential direction C, e.g. an angle of 15°.

The second-outermost belt layer 128 may include steel cords 148 manufactured as HI steel cords and having the configuration shown in Figure 5, in particular a 5*0.30 configuration. As the steel cords 146 of the third-outermost belt layer 126 the steel cords 148 may confine an acute angle with the circumferential direction C, e.g. an angle of 15°.

Finally, the steel cords 150 of the outermost belt layer 130 may be manufactured as HE steel cords and, like the steel cords of a cap ply, extend substantially in the circumferential direction C, i.e. confine with the circumferential direction C an angle of 0°, which reduces the tire growth under the inflation pressure of the tire 100, which may amount to up to 10 bar or even more, and under rotation in operation. Furthermore, the steel cords 150 may have the 3+7 configuration shown in Figure 6. Moreover, the steel cords 150 of the outermost belt layer 130 may be arranged with a density of about 40 cords per decimeter layer width.

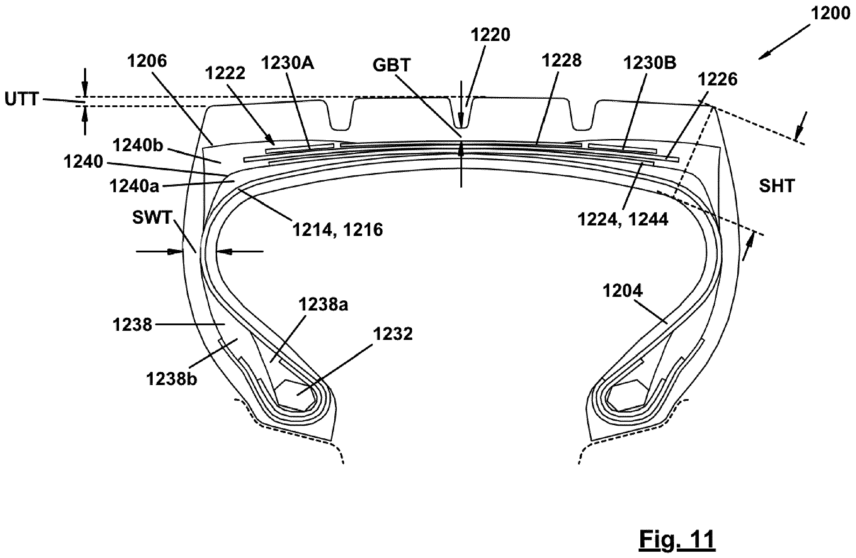

Figure 11 shows a tire cross-section of a tire according to an alternative embodiment of the invention. The tire of Figure 11 substantially corresponds to the tire of Figure 1. As a consequence, analogous parts are designated by the same reference numerals as in Figure 1, however increased by 1100. Furthermore, only the differences between the tire 1200 of Figure 11 and the tire 100 of Figure 1 will be described in the following. With respect to the description of all other parts, it is referred to the description of the embodiment of Figure 1.

First of all, the tire 1200 of Figure 11 comprises two cap ply strips 1230A and 1230B which are located in a side by side arrangement with the second-outermost belt layer 1228, in order to prevent an exceedingly high diameter growth under pressure and during operation, i.e. rotation of the tire in contact with the underground. These two 1230A and 1230B replace the single cap ply strip 130 located in the center of the tire cross-section of the tire 100 of Figure 1. Preferably, the cap ply strips 1230A, 1230B have a predetermined lateral distance, of e.g. a maximum of 5 mm, from the second-outermost belt layer 1228. Furthermore, each of the cap ply strips 1230A, 1230B may include two cap ply layers arranged one above the other in a radial direction R of the tire 1200.

In this embodiment the innermost belt layer 1224 may have a width of about 168 mm, the second-outermost belt layer 1228 may have a width of about 110 mm, and the third-outermost belt layer 1226 may have a width of about 190 mm, while the cap play strips may have a width of about 29 mm.

As a second difference, the bead apex 1238 may include at least two bead apex sections 1238a, 1238b, a first bead apex section 1238a being located adjacent to the bead ring 1232 and a second bead apex section 1238b being located distant from the bead ring 1232. Providing two or more bead apex sections 1238a, 1238b allows a greater variability for influencing the flexibility of the tire 1200. For example, the elasticity modulus of the material of the first bead apex section 1238a may be selected to be higher than the elasticity modulus of the material of the second bead apex section 1238b.

Thirdly, the shoulder apex 1240 may include at least two shoulder apex sections 1240a, 1240b, a first shoulder apex section 1240a corresponding to the above-discussed, preferably sickle-shaped, shoulder apex 140 of the tire 100 of Figure 1, and a second shoulder apex section 1240b covering the first shoulder apex section 1240a and the belt 1222 from above, i.e. from radially outward. Providing the second shoulder apex section 1240b which covers the belt 1222 from above allows to deal with the stress emanating from the belt 1222 in the direction of the should in a more effective manner. As such, although the elasticity modulus of the materials of the first and second shoulder apex sections 1240a, 1240b may be different, it is also conceivable that they are equal.

In order to reduce the stress in the shoulder regions 1206 of the tires 1200, the thickness SHT of the shoulder area 1206 may amount to a maximum of 35 mm and/or the undertread thickness UTT of the tire 1200 may amount to a maximum of 5 mm and/or the minimum thickness SWT of the side wall 1204 of the tire 1200 may amount to a maximum of 10 mm and/or the thickness GBT measured from the bottom of the central circumferential profile groove 1220 to the upper edge of the belt 1222 may amount to a maximum of 5 mm.

It is to be understood that not all of these differences have to be applied simultaneously. For example, starting from the embodiment of Figure 1, only the first and second bead apex regions 1238a, 1238b and the first and second shoulder apex regions 1240a, 1240b could be applied together with the design rules of the shoulder thickness SHT and/or the undertread thickness UTT and/or the side wall thickness SWT. In this context the outermost belt layer could have a width of about 110 mm, the second-outermost belt layer could have a width of about 178 mm, the third-outermost belt layer could have a width of about 190 mm, and the innermost belt layer could have a width of about 168 mm.

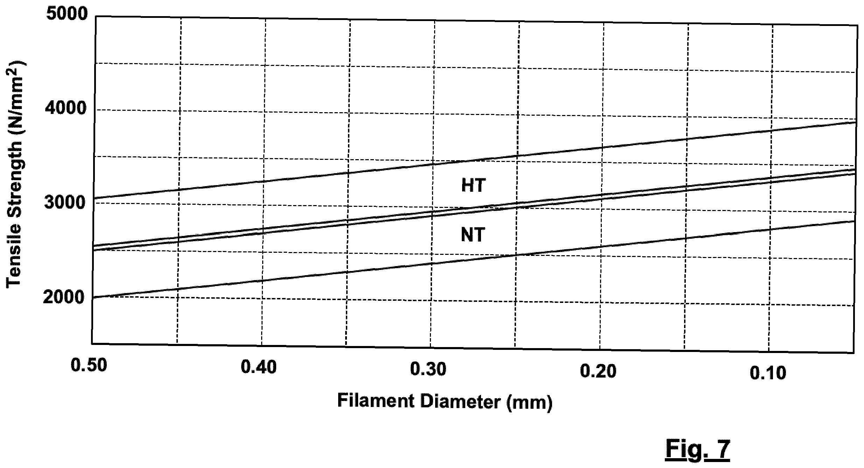

Figure 7 shows the tensile strength versus steel filament diameter characteristic of HT steel filaments and NT steel filaments. For example, this characteristic may described by the following equation:

$$TS = X - 2000 \, \text{N/mm}^3 \cdot D$$

wherein TS designates the tensile strength in $\text{N/mm}^2$, D the filament diameter in millimeters, and X is a parameter which may have a value of between 3600 $\text{N/mm}^3$ and 4000 $\text{N/mm}^3$ for HT steel and between 3040 $\text{N/mm}^3$ and 3440 $\text{N/mm}^3$ for NT steel.

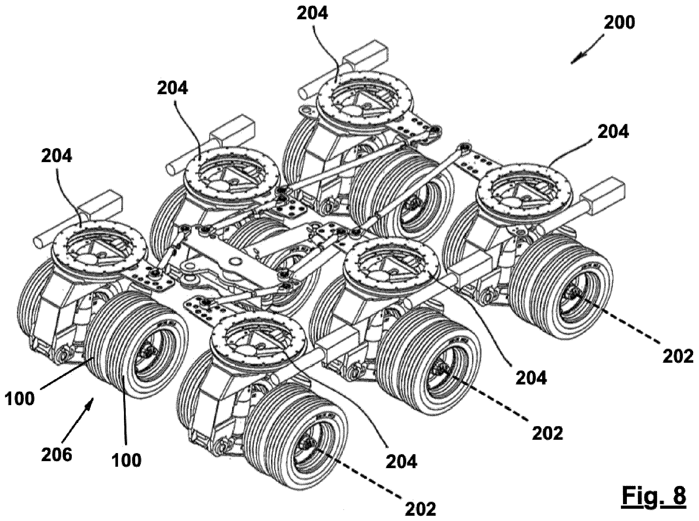

Referring now to Figures 8 to 10, the invention further relates to a heavy-load vehicle.

Figure 8 shows a heavy-load vehicle 200 with a plurality of axle lines 202. Each axle line 202 has two axle units 204, namely a first axle unit 204 located at the left side of the heavy-load vehicle 200 and a second axle unit 204 located at the right side of the heavy-load vehicle 200. Furthermore, each of the axle units 204 has four wheels, each of the wheels 206 including one tubeless radial tire 100 according to the invention.

It would, however, also be conceivable that the pendular axle unit 204 has only two wheels 206, one on each side of the pendular axle, each of the wheels 206 including one tubeless radial tire 100 according to the invention.

Although the axle units 204 are pendular axle units, the invention is not limited to this specific type of axle units.

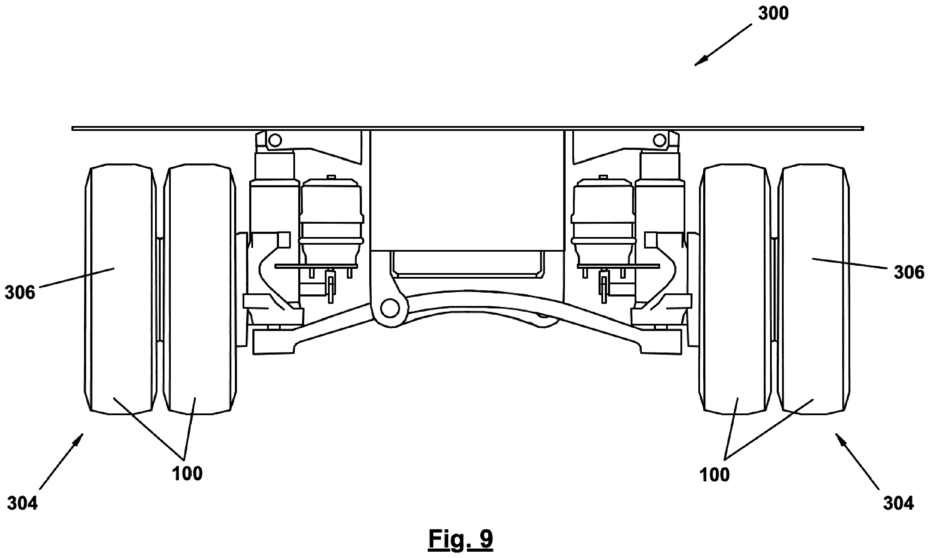

As a further example, Figure 9 shows a heavy-load vehicle 300 having two individually suspended axle units 304, in particular MacPherson type axle units. Each of the axle units 304 has two wheels 306, and each of the wheels 306 including one tubeless radial tire 100 according to the invention.

It would, however, also be conceivable that the individually suspended axle units 304 has only one wheel 306 with one tubeless radial tire 100 according to the invention.

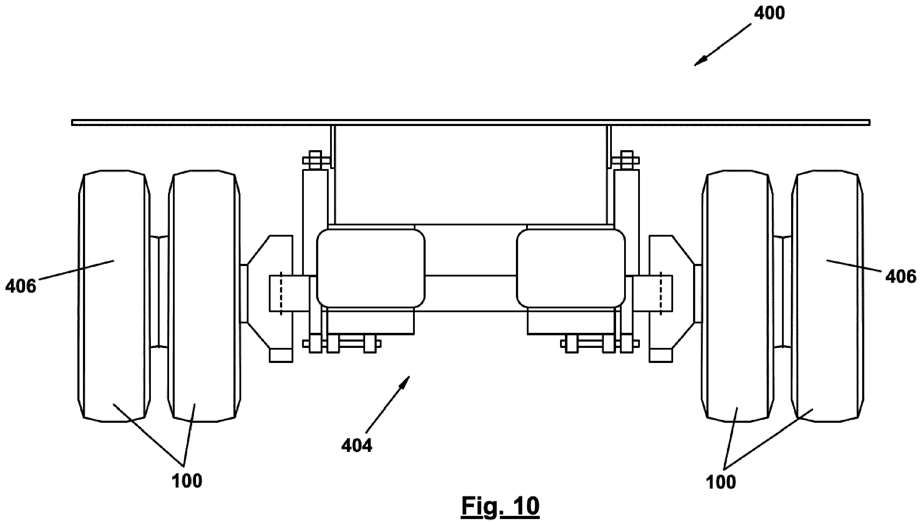

Furthermore, Figure 10 shows a heavy-load vehicle 400 having a beam axle unit 404. The axle unit 404 has four wheels 406, each of the wheels 406 including one tubeless radial tire 100 according to the invention.

It would, however, also be conceivable that the beam axle unit 404 has only two wheels 406, one on each side of the vehicle 400, each of the wheels 406 including one tubeless radial tire 100 according to the invention.

Moreover, the suspension of the axle units may be a mechanical suspension and/or a spring suspension and/or an air suspension and/or a hydraulic suspension.

As the general construction of heavy-load vehicles having rigid axle units and/or individually suspended axle units and/or pendular axle units is known in the art, a detailed description of these heavy-load vehicles and axle units, respectively, is omitted here for the sake of simplicity.

Generally, Figures 8 to 10 show only exemplary embodiments of a heavy-load vehicles. In particular, the heavy-load vehicle of the invention may be a self-propelled vehicle or a towed vehicle, including fifth wheel trailers and/or axle supported trailers. Further, the axle units of the heavy-load vehicle may be force-steered axle units and/or friction-steered axle units and/or rigid axle units.

With respect to the specific embodiments 1 to 4 indicated in Tables 1 to 4, it is to be noted, that embodiments 1 and 4 of Tables 1 and 4 are optimized embodiments, whereas embodiments 2 and 3 of Tables 2 and 3 have been derived from embodiment 1 by simply changing the tire diameter, while maintaining all materials and internal dimensions as in embodiment 1. As a consequence, not the theoretically available load-bearing capacity could be used. Rather, an increased stress was compensated by reducing the load-bearing capacity in order to achieve the same operation safety as for embodiment 1.

**Table 1:specific example 1 according to the invention**

| General Parameters | | |
|---|---|---|
| Construction | Radial / Tubeless | |
| Design Pressure | 10 bar | |
| Design OD | 712 mm | |
| Design SH | 134 mm | |

(continued)

| General Parameters | | |
|---|---|---|
| Design SW | 238 mm | |
| Sidewall Protector | 4 mm | |
| Rim Size | 6.75 x 17.5 | |
| | | |
| Max. Load at 60 km/h | 3300 kg | |
| | | |
| **Carcass** | | |
| Steel Cord Type | 3+9+15*0.175+0.15NT | |
| Tensile Strength | 1720 N | |
| Cord EPD | 60 | |
| | | |
| **Bead** | | |
| Number of Windinqs | 58 | |
| Configuration | Hexagonal 7-...-10-...-7 | |
| Tensile Strength | 3900 N | |
| | | |
| **Belt** | | |
| Belt Layer | #1 (innermost) | #2 (third-outermost) |
| Belt Width | 160 mm | 180 mm |
| Steel Cord Type | 3*0.20+6*0.35HT | 3*0.20+6*0.35HT |
| Tensile Strength | 1870 N | 1870 N |
| Cord EPD | 60 | 60 |
| Angle | 24° | 15° |
| | | |
| Belt Layer | #3 (second-outermost) | #4 (outermost) |
| Belt Width | 100 mm | 29 mm |
| Steel Cord Type | 5*0.30HI | 3+7*0.20HE |
| Tensile Strength | 1875 N | 1360 N |
| Cord EPD | 40 | NA |
| Angle | 15° | 0° |

**Table 2:specific example 2 according to the invention**

| General Parameters | | |
|---|---|---|
| Construction | Radial / Tubeless | |
| Design Pressure | 10 bar | |
| Design OD | 755 mm | |
| Design SH | 155 mm | |

(continued)

| General Parameters | | |
|---|---|---|
| Design SW | 238 mm | |
| Sidewall Protector | 4 mm | |
| Rim Size | 6.75 x 17.5 | |
| | | |
| Max. Load at 60 km/h | 3250 kg | |
| | | |
| **Carcass** | | |
| Steel Cord Type | 3+9+15*0.175+0.15NT | |
| Tensile Strength | 1720 N | |
| Cord EPD | 60 | |
| | | |
| **Bead** | | |
| Number of Windinqs | 58 | |
| Configuration | Hexagonal 7-...-10-...-7 | |
| Tensile Strength | 3900 N | |
| | | |
| **Belt** | | |
| Belt Layer | #1 (innermost) | #2 (third-outermost) |
| Belt Width | 160 mm | 180 mm |
| Steel Cord Type | 3*0.20+6*0.35HT | 3*0.20+6*0.35HT |
| Tensile Strength | 1870 N | 1870 N |
| Cord EPD | 60 | 60 |
| Angle | 24° | 15° |
| | | |
| Belt Layer | #3 (second-outermost) | #4 (outermost) |
| Belt Width | 100 mm | 29 mm |
| Steel Cord Type | 5*0.30HI | 3+7*0.20HE |
| Tensile Strength | 1875 N | 1360 N |
| Cord EPD | 40 | NA |
| Angle | 15° | 0° |

**Table 3:specific example 3 according to the invention**

| General Parameters | | |
|---|---|---|
| Construction | Radial / Tubeless | |
| Design Pressure | 10 bar | |
| Design OD | 735 mm | |
| Design SH | 145 mm | |

(continued)

| General Parameters | | |
|---|---|---|
| Design SW | 238 mm | |
| Sidewall Protector | 4 mm | |
| Rim Size | 6.75 x 17.5 | |
| | | |
| Max. Load at 60 km/h | 3280 kg | |
| | | |
| **Carcass** | | |
| Steel Cord Type | 3+9+15*0.175+0.15NT | |
| Tensile Strength | 1720 N | |
| Cord EPD | 60 | |
| | | |
| **Bead** | | |
| Number of Windinqs | 58 | |
| Configuration | Hexagonal 7-...-10-...-7 | |
| Tensile Strength | 3900 N | |
| | | |
| **Belt** | | |
| Belt Layer | #1 (innermost) | #2 (third-outermost) |
| Belt Width | 160 mm | 180 mm |
| Steel Cord Type | 3*0.20+6*0.35HT | 3*0.20+6*0.35HT |
| Tensile Strength | 1870 N | 1870 N |
| Cord EPD | 60 | 60 |
| Angle | 24° | 15° |
| | | |
| Belt Layer | #3 (second-outermost) | #4 (outermost) |
| Belt Width | 100 mm | 29 mm |
| Steel Cord Type | 5*0.30HI | 3+7*0.20HE |
| Tensile Strength | 1875 N | 1360 N |
| Cord EPD | 40 | NA |
| Angle | 15° | 0° |

**Table 4:specific example 4 according to the invention**

| General Parameters | | |
|---|---|---|
| Construction | Radial / Tubeless | |
| Design Pressure | 10 bar | |
| Design SW | 215 mm | |
| Design OD | 712 mm | |

(continued)

| General Parameters | | |
|---|---|---|
| Design SH | 134 mm | |
| Sidewall Protector | 4 mm | |
| Rim Size | 6.00 x 17.5 | |
| Max. Load at 60 km/h | 2750 kg | |
| | | |
| **Carcass** | | |
| Steel Cord Type | 3+9+15*0.175+0.15NT | |
| Tensile Strength | 1720 N | |
| Cord EPD | 60 | |
| | | |
| **Bead** | | |
| Number of Windings | 58 | |
| Configuration | Hexagonal 7-...-10-...-7 | |
| Tensile Strength | 3900 N | |
| | | |
| **Belt** | | |
| Belt Layer | #1 (innermost) | #2 (third-outermost) |
| Belt Width | 145 mm | 160 mm |
| Steel Cord Type | 3*0.20+6*0.35HT | 3*0.20+6*0.35HT |
| Tensile Strength | 1870 N | 1870 N |
| Cord EPD | 60 | 60 |
| Angle | 24° | 15° |
| | | |
| Belt Layer | #3 (second-outermost) | #4 (outermost) |
| Belt Width | 100 mm | 20 mm |
| Steel Cord Type | 5*0.30HI | 3+7*0.20HE |
| Tensile Strength | 1875 N | 1360 N |
| Cord EPD | 40 | NA |
| Angle | 15° | 0° |

**Claims**

1. A heavy-load vehicle (200) comprising at least one axle unit (204), the or each axle unit (204) comprising at least one wheel (206), each wheel comprising at least one tire, at least one tire being a tubeless radial tire (100; 1200) having, when used as a single tire, a load-bearing capacity per millimeter section width (SW) at a speed of 60 km/h of at least 11 kg,
**characterized in that** the tire (100; 1200) has an outer diameter (OD) of less than 755 mm, and is adapted and configured for an internal pressure of at least 10 bar.

2. The heavy-load vehicle according to claim 1,
**characterized in that** the tire (100; 1200) has an outer diameter (OD) of less than 735 mm, preferably less than 715 mm.

3.   The heavy-load vehicle according to claim 1 or 2,
**characterized in that** the tire (100; 1200) has, when used as a single tire, a load-bearing capacity per millimeter section width (SW) at a speed of 60 km/h of at least 12.5 kg.

4.   The heavy-load vehicle according to any of claims 1 to 3,
**characterized in that** the tire (100; 1200) has at a speed of 60 km/h a load-bearing capacity per square millimeter section width (SW) times section height (SH) of at least 80 g, preferably at least 95 g.

5.   The heavy-load vehicle according to any of claims 1 to 4,
**characterized in that** the wire (133) forming at least one bead ring (132; 1232) of the tire (100; 1200) includes, preferably the wires (133) forming both bead rings (132; 1232) of the tire (100; 1200) include, a plurality of windings, immediately adjacent wire sections being arranged in a triangular constellation.

6.   The heavy-load vehicle according to claim 5,
**characterized in that** the steel wire (133) of at least one bead ring (132; 1232) is arranged, preferably the steel wires (133) of both bead rings (132; 1232) are arranged, when seen in a cross-section extending orthogonal to a circumferential direction (C) around the rotational axis (A) of the tire (100; 1200), according to a hexagonal shape.

7.   The heavy-load vehicle according to claim 5 or 6,
**characterized in that** at least one bead ring (132; 1232) includes, preferably both bead rings (132; 1232) include, at least 44, preferably at least 51, more preferably at least 58, windings of the bead wire (133).

8.   The heavy-load vehicle according to any of claims 1 to 7,
**characterized in that** at least one steel cord (116; 1216), preferably each steel cord (116; 1216), of a carcass (114; 1214) of the tire (100; 1200) comprises at least 20, preferably at least 25, steel filaments.

9.   The heavy-load vehicle according to any of claims 1 to 8,
**characterized in that** a belt (122) of the tire (100) has a plurality of belt layers (124, 126, 128, 130), wherein the outermost belt layer (130) has a smaller width than the second-outermost belt layer (128), which in turn has a smaller width than the third-outermost belt layer (126), and wherein the three belt layers (126, 128, 130) are preferably arranged symmetrically one above the other.

10.   The heavy-load vehicle according to claim 9,
**characterized in that** the steel cords (150) of the outermost belt layer (130) extend substantially in circumferential direction (C).

11.   The heavy-load vehicle according to any of claims 1 to 8,
**characterized in that** instead of an outermost belt layer two cap ply strips (1230A, 1230B) are arranged in a side by side arrangement with a second-outermost belt layer (1228), preferably at least one of the cap ply strips (1230A, 1230B) having a predetermined lateral distance from the lateral end of the second-outermost belt layer (1228).

12.   The heavy-load vehicle according to any of claims 9 to 11,
**characterized in that** the steel cords (144; 1244) of the innermost belt layer (124; 1224) confine an angle of less than 45°, preferably less than 35°, more preferably less than 25°, with the circumferential direction (C).

13.   The heavy-load vehicle according to any of claims 8 to 12,
**characterized in that** at least one of the carcass (114; 1214), the third-outermost belt layer (126; 1226) and the innermost belt layer (124; 1224) has an ends per decimeter value of at least 50, preferably of at least 55, more preferably of at least 60 ends per decimeter.

14.   The heavy-load vehicle according to any of claims 5 to 13,
**characterized in that** a bead apex (138; 1238), preferably made from high elasticity modulus rubber, is located adjacent to and radially outward of at least one of the bead rings (132; 1232), preferably both bead rings (132; 1232), the bead apex (1238) optionally including at least two bead apex sections (1238a, 1238b), a first bead apex section (1238a) being located adjacent to the bead ring (1232) and a second bead apex section (1238b) being located distant from the bead ring (1232).

**15.** The heavy-load vehicle according to any of claims 5 to 13,
**characterized in that** a shoulder apex (140; 1240a), preferably made from high elasticity modulus rubber, is located in at least one of the wedges, preferably in both wedges, between the belt (122; 1222) and the carcass (114; 1214), optionally a second shoulder apex section (1240b) covering the shoulder apex (1240a) and the belt (1222) from radially outward.

**16.** The heavy-load vehicle according to any of claims 1 to 15,
**characterized in that** a thickness (SHT) of a shoulder area (1206) amounts to a maximum of 35 mm and/or an undertread thickness (UTT) of the tire (1200) amounts to a maximum of 5 mm and/or a minimum thickness (SWT) of a side wall (1204) of the tire (1200) amounts to a maximum of 10 mm and/or a thickness (GBT) measured from a bottom of a central circumferential profile groove (1220) to an upper edge of the belt (1222) may amount to a maximum of 5 mm.

**Patentansprüche**

**1.** Schwerlastfahrzeug (200), umfassend wenigstens eine Achseinheit (204), wobei die oder jede Achseinheit (204) wenigstens ein Rad (206) umfasst, wobei jedes Rad wenigstens einen Reifen umfasst, wobei wenigstens ein Reifen ein schlauchloser Radialreifen (100; 1200) ist, welcher, bei Verwendung als Einzelreifen, eine Lasttragfähigkeit pro Millimeter Querschnittsbreite (SW) bei einer Geschwindigkeit von 60 km/h von wenigstens 11 kg aufweist, **dadurch gekennzeichnet, dass** der Reifen (100; 1200) einen Außendurchmesser (OD) von weniger als 755 mm aufweist und für einen Innendruck von wenigstens 10 bar ausgelegt und eingerichtet ist.

**2.** Schwerlastfahrzeug nach Anspruch 1,
**dadurch gekennzeichnet, dass** der Reifen (100; 1200) einen Außendurchmesser (OD) von weniger als 735 mm, vorzugsweise von weniger als 715 mm, aufweist.

**3.** Schwerlastfahrzeug nach Anspruch 1 oder 2,
**dadurch gekennzeichnet, dass** der Reifen (100; 1200), bei Verwendung als Einzelreifen, eine Lasttragfähigkeit pro Millimeter Querschnittsbreite (SW) bei einer Geschwindigkeit von 60 km/h von wenigstens 12,5 kg aufweist.

**4.** Schwerlastfahrzeug nach einem der Ansprüche 1 bis 3,
**dadurch gekennzeichnet, dass** der Reifen (100; 1200) bei einer Geschwindigkeit von 60 km/h eine Lasttragfähigkeit pro Millimeter Querschnittsbreite (SW) mal Querschnittshöhe (SH) von wenigstens 80 g, vorzugsweise von wenigstens 95 g, aufweist.

**5.** Schwerlastfahrzeug nach einem der Ansprüche 1 bis 4,
**dadurch gekennzeichnet, dass** der Draht (133), welcher wenigstens einen Wulstring (132; 1232) des Reifens (100; 1200) bildet, vorzugsweise die Drähte (133), welche beide Wulstringe (132; 1232) des Reifens (100; 1200) bilden, eine Mehrzahl von Wicklungen umfasst/umfassen, wobei unmittelbar benachbarte Drahtabschnitte in einer dreieckigen Konstellation angeordnet sind.

**6.** Schwerlastfahrzeug nach Anspruch 5,
**dadurch gekennzeichnet, dass** der Stahldraht (133) wenigstens eines Wulstrings (132; 1232), vorzugsweise die Stahldrähte (133) beider Wulstringe (132; 1232), wenn in einem Querschnitt betrachtet, welcher sich orthogonal zu einer Umfangsrichtung (C) um die Rotationsachse (A) des Reifens (100, 1200) herum erstreckt, gemäß einer hexagonalen Form angeordnet ist/sind.

**7.** Schwerlastfahrzeug nach Anspruch 5 oder 6,
**dadurch gekennzeichnet, dass** wenigstens ein Wulstring (132; 1232), vorzugsweise beide Wulstringe (132; 1232) wenigstens 44, vorzugsweise wenigstens 51, weiter vorzugsweise wenigstens 58, Wicklungen des Wulstdrahtes (133) umfasst/umfassen.

**8.** Schwerlastfahrzeug nach einem der Ansprüche 1 bis 7,
**dadurch gekennzeichnet, dass** wenigstens ein Stahlseil (116; 1216), vorzugsweise jedes Stahlseil (116; 1216), einer Karkasse (114; 1214) des Reifens (100; 1200) wenigstens 20, vorzugsweise wenigstens 25, Stahlfilamente umfasst.

9. Schwerlastfahrzeug nach einem der Ansprüche 1 bis 8,
   **dadurch gekennzeichnet, dass** ein Gürtel (122) des Reifens (100) eine Mehrzahl von Gürtelschichten (124, 126, 128, 130) aufweist, wobei die äußerste Gürtelschicht (130) eine geringere Breite als die zweitäußerste Gürtelschicht (128) aufweist, welche wiederum eine geringere Breite als die drittäußerste Gürtelschicht (126) aufweist, und wobei die drei Gürtelschichten (126, 128, 130) vorzugsweise symmetrisch übereinander angeordnet sind.

10. Schwerlastfahrzeug nach Anspruch 9,
    **dadurch gekennzeichnet, dass** sich die Stahlseile (150) der äußersten Gürtelschicht (130) im Wesentlichen in Umfangsrichtung (C) erstrecken.

11. Schwerlastfahrzeug nach einem der Ansprüche 1 bis 8,
    **dadurch gekennzeichnet, dass** anstelle einer äußersten Gürtelschicht zwei Decklagenstreifen (1230A; 1230B) in einer Seite-an-Seite-Anordnung mit einer zweitäußersten Gürtelschicht (1228) angeordnet sind, wobei vorzugsweise wenigstens einer der Decklagenstreifen (1230A, 1230B) einen vorbestimmten lateralen Abstand von dem lateralen Ende der zweitäußersten Gürtelschicht (1228) aufweist.

12. Schwerlastfahrzeug nach einem der Ansprüche 9 bis 11,
    **dadurch gekennzeichnet, dass** die Stahlseile (144, 1244) der innersten Gürtelschicht (124; 1224) einen Winkel von weniger als 45°, vorzugsweise von weniger als 35°, weiter vorzugsweise von weniger als 25°, mit der Umfangsrichtung (C) begrenzen.

13. Schwerlastfahrzeug nach einem der Ansprüche 8 bis 12,
    **dadurch gekennzeichnet, dass** wenigstens eines aus der Karkasse (114; 1214), der drittäußersten Gürtelschicht (126; 1226) und der innersten Gürtelschicht (124; 1224) einen Enden-pro-Dezimeter-Wert von wenigstens 50, vorzugsweise von wenigstens 55, weiter vorzugsweise von wenigstens 60, Enden pro Dezimeter aufweist.

14. Schwerlastfahrzeug nach einem der Ansprüche 5 bis 13,
    **dadurch gekennzeichnet, dass** ein Wulst-Apex (138; 1238), welcher vorzugsweise aus Kautschuk/Gummi mit hohem Elastizitätsmodul hergestellt ist, benachbart zu und radial außerhalb von wenigstens einem der Wulstringe (132; 1232), vorzugsweise beiden Wulstringen (132; 1232), angeordnet ist,
    wobei der Wulst-Apex (1238) optional wenigstens zwei Wulst-Apex-Abschnitte (1238a, 1238b) umfasst, wobei ein erster Wulst-Apex-Abschnitt (1238a) dem Wulstring (1232) benachbart angeordnet ist und ein zweiter Wulst-Apex-Abschnitt (1238b) von dem Wulstring (1232) entfernt angeordnet ist.

15. Schwerlastfahrzeug nach einem der Ansprüche 5 bis 13,
    **dadurch gekennzeichnet, dass** ein Schulter-Apex (140, 1240a), welcher vorzugsweise aus Kautschuk/Gummi mit hohem Elastizitätsmodul hergestellt ist, in wenigstens einem der Keile, vorzugsweise in beiden Keilen, zwischen dem Gürtel (122; 1222) und der Karkasse (114; 1214) angeordnet ist,
    wobei optional ein zweiter Schulter-Apex-Abschnitt (1240b) den Schulter-Apex (1240a) und den Gürtel (1222) von radial außen abdeckt.

16. Schwerlastfahrzeug nach einem der Ansprüche 1 bis 15,
    **dadurch gekennzeichnet, dass** eine Dicke (SHT) eines Schulterbereichs (1206) maximal 35 mm beträgt und/oder eine Unter-Laufflächen-Dicke (UTT) des Reifens (1200) maximal 5 mm beträgt und/oder eine minimale Dicke (SWT) einer Seitenwand (1204) des Reifens (1200) maximal 10 mm beträgt und/oder eine Dicke (GBT), gemessen von einer Unterseite einer mittigen Umfangsprofilnut (1220) zu einem oberen Rand des Gürtels (1222), bis zu maximal 5 mm betragen kann.

**Revendications**

1. Véhicule de transport de charges lourdes (200) comprenant au moins une unité d'essieu (204), la ou chaque unité d'essieu (204) comprenant au moins une roue (206), chaque roue comprenant au moins un pneu, au moins un pneu étant un pneu radial sans chambre à air (100; 1200) ayant, lorsqu'il est utilisé comme pneu unique, une capacité de charge par millimètre de largeur de section (SW) à une vitesse de 60 km/h d'au moins 11 kg,
   **caractérisé en ce que** le pneu (100; 1200) a un diamètre extérieur (OD) inférieur à 755 mm, et est adapté et configuré pour une pression interne d'au moins 10 bars.

**2.** Véhicule de transport de charges lourdes selon la revendication 1,
**caractérisé en ce que** le pneu (100; 1200) a un diamètre extérieur (OD) inférieur à 735 mm, de préférence inférieur à 715 mm.

**3.** Véhicule de transport de charges lourdes selon la revendication 1 ou 2,
**caractérisé en ce que** le pneu (100; 1200) a, lorsqu'il est utilisé comme pneu unique, une capacité de charge par millimètre de largeur de section (SW) à une vitesse de 60 km/h d'au moins 12,5 kg.

**4.** Véhicule de transport de charges lourdes selon l'une des revendications 1 à 3,
**caractérisé en ce que** le pneu (100; 1200) a, à une vitesse de 60 km/h, une capacité de charge par millimètre carré de largeur de section (SW) multipliée par la hauteur de section (SH) d'au moins 80 g, de préférence d'au moins 95 g.

**5.** Véhicule de transport de charges lourdes selon l'une des revendications 1 à 4,
**caractérisé en ce que** le fil (133) formant au moins une talon de talon (132; 1232) du pneu (100; 1200) comprend, de préférence les fils (133) formant les deux talons de talon (132; 1232) du pneu (100; 1200) comprennent, une pluralité d'enroulements, des sections de fil immédiatement adjacentes étant disposées en une constellation triangulaire

**6.** Véhicule de transport de charges lourdes selon la revendication 5,
**caractérisé en ce que** le fil d'acier (133) d'au moins une talon de talon (132; 1232) est disposé, de préférence les fils d'acier (133) des deux talons de talon (132; 1232) sont disposés, lorsqu'ils sont vus dans une section transversale s'étendant orthogonalement à une direction circonférentielle (C) autour de l'axe de rotation (A) du pneu (100; 1200), selon une forme hexagonale.

**7.** Véhicule de transport de charges lourdes selon la revendication 5 ou 6,
**caractérisé en ce qu'au** moins une talon de talon (132; 1232) comprend, de préférence les deux talons de talon (132; 1232) comprennent, au moins 44, de préférence au moins 51, plus préférablement au moins 58, des enroulements de la talon de talon (133).

**8.** Véhicule de transport de charges lourdes selon l'une des revendications 1 à 7,
**caractérisé en ce qu'au** moins un câble d'acier (116; 1216), de préférence chaque câble d'acier (116; 1216), d'une carcasse (114; 1214) du pneu (100; 1200) comprend au moins 20, de préférence au moins 25, filaments d'acier.

**9.** Véhicule de transport de charges lourdes selon l'une des revendications 1 à 8,
**caractérisé en ce qu'**une ceinture (122) du pneu (100) a une pluralité de couches de ceinture (124, 126, 128, 130), dans lequel la couche de ceinture la plus extérieure (130) a une largeur plus petite que la deuxième couche de ceinture la plus extérieure (128), qui à son tour a une largeur plus petite que la troisième couche de ceinture la plus extérieure (126), et dans lequel les trois couches de ceinture (126, 128, 130) sont de préférence disposées symétriquement les unes au-dessus des autres.

**10.** Véhicule de transport de charges lourdes selon la revendication 9,
**caractérisé en ce que** les câbles d'acier (150) de la couche de ceinture la plus extérieure (130) s'étendent sensiblement dans la direction circonférentielle (C).

**11.** Véhicule de transport de charges lourdes selon l'une quelconque des revendications 1 à 8, **caractérisé en ce qu'**au lieu d'une couche de ceinture la plus extérieure, deux bandes de couche de recouvrement (1230A, 1230B) sont disposées côte à côte avec une deuxième couche de ceinture la plus extérieure (1228), de préférence au moins une des bandes de couche de recouvrement (1230A, 1230B) ayant une distance latérale prédéterminée de l'extrémité latérale de la deuxième couche de ceinture la plus extérieure (1228).

**12.** Véhicule de transport de charges lourdes selon l'une des revendications 9 à 11,
**caractérisé en ce que** les câbles d'acier (144; 1244) de la couche de ceinture la plus intérieure (124; 1224) forment un angle inférieur à 45°, de préférence inférieur à 35°, plus préférablement inférieur à 25°, avec la direction circonférentielle (C).

**13.** Véhicule de transport de charges lourdes selon l'une des revendications 8 à 12,
**caractérisé en ce qu'**au moins l'une de la carcasse (114; 1214), de la troisième couche de ceinture la plus extérieure (126; 1226) et de la couche de ceinture la plus intérieure (124; 1224) a une **valeur de périmètre** d'au moins 50, de préférence d'au moins 55, plus préférablement d'au moins 60 extrémités de périmètre.

14. Véhicule de transport de charges lourdes selon l'une des revendications 5 à 13,
**caractérisé en ce qu'**un sommet de talon (138; 1238), de préférence en caoutchouc à haut module d'élasticité, est situé à côté et radialement à l'extérieur d'au moins un des anneaux de talon (132; 1232), de préférence des deux anneaux de talon (132; 1232), le sommet de talon (1238) comprenant éventuellement au moins deux sections de sommet de talon (1238a, 1238b), une première section de sommet de talon (1238a) étant située à proximité de l'anneau de talon (1232) et une deuxième section de sommet de talon (1238b) étant située à distance de l'anneau de talon (1232).

15. Véhicule de transport de charges lourdes selon l'une des revendications 5 à 13,
**caractérisé en ce qu'**un sommet d'épaule (140; 1240a), de préférence en caoutchouc à haut module d'élasticité, est situé dans au moins l'un des coins, de préférence dans les deux coins, entre la ceinture (122; 1222) et la carcasse (114; 1214), éventuellement une deuxième section de sommet d'épaule (1240b) couvrant le sommet d'épaule (1240a) et la ceinture (1222) de manière radiale vers l'extérieur.

16. Véhicule de transport de charges lourdes selon l'une des revendications 1 à 15,
**caractérisé en ce qu'**une épaisseur (SHT) d'une zone d'épaule (1206) s'élève à un maximum de 35 mm et/ou une épaisseur sous la bande de roulement (UTT) du pneu (1200) s'élève à un maximum de 5 mm et/ou une épaisseur minimale (SV\IT) d'une paroi latérale (1204) du pneu (1200) s'élève à un maximum de 10 mm et/ou une épaisseur (GBT) mesurée à partir du fond d'une rainure centrale de profil circonférentiel (1220) jusqu'à un bord supérieur de la ceinture (1222) peut s'élever à un maximum de 5 mm.

Fig. 1

132

133

**Fig. 2**

116

**Fig. 3**

138,140

**Fig. 4**

142

**Fig. 5**

144

**Fig. 6**

**Fig. 7**

**Fig. 8**

EP 3 700 762 B1

**Fig. 9**

**Fig. 10**

**Fig. 11**

EP 3 700 762 B1

**REFERENCES CITED IN THE DESCRIPTION**

**Patent documents cited in the description**

- EP 2848432 A1
- US 2013299052 A1